Europäisches Patentamt

European Patent Office

Office européen des brevets

(11) Veröffentlichungsnummer: **0 305 339**
A1

## (12) EUROPÄISCHE PATENTANMELDUNG

(21) Anmeldenummer: 88810594.7

(22) Anmeldetag: 29.08.88

(51) Int. Cl.⁴: **C 03 C 25/02**
C 03 B 37/05, C 03 B 37/14,
A 62 C 1/16, E 04 B 1/74

(30) Priorität: 27.08.87 CH 3313/87

(43) Veröffentlichungstag der Anmeldung:
01.03.89 Patentblatt 89/09

(84) Benannte Vertragsstaaten:
AT BE CH DE ES FR GB GR IT LI LU NL SE

(71) Anmelder: FLUMROC AG
Industriestrasse
CH-8890 Flums (CH)

(72) Erfinder: Zogg, Hans
Wolfgarten
CH-9477 Trübbach (CH)

Egli, Walter
Habshagstrasse 18
CH-4153 Reinach (CH)

Schütz, Gerhard
Neudorf 4
CH-8890 Flums (CH)

(74) Vertreter: Riederer, Conrad A., Dr.
Bahnhofstrasse 10
CH-7310 Bad Ragaz (CH)

(54) **Verfahren und Vorrichtung zur Herstellung von Mineralfasern oder Mineralfaserngranulat, Mineralfaserngranulat und Anwendung desselben.**

(57) Die Mineralfasern (19) werden unmittelbar nach ihrer Entstehung noch im Fluge mit einem anorganischen Kleber (23) beschichtet. Die beschichteten Mineralfasern (27) werden dann einer Einrichtung (29) zugeführt. Diese besitzt einen Rotor (35) mit gelenkigen Armen (37), die über ein Sieb (31) streichen. Dabei werden die beschichteten Mineralfasern zu Kügelchen zusammengerollt und durch Oeffnungen (33) des Siebes (31) gedrückt. Diese Kügelchen stellen ein fliessfähiges Granulat dar, das zusammen mit Wasser mit einer Spritzpistole auf zu beschichtende Objekte gespritzt werden kann, um eine dem Brandschutz dienende feuerbeständige Beschichtung zu erstellen.

Fig. 1

Fig. 2

EP 0 305 339 A1

# Beschreibung

## Verfahren und Vorrichtung zur Herstellung von Mineralfasern oder Mineralfaserngranulat, Mineralfaserngranulat und Anwendung desselben

Die vorliegende Erfindung betrifft ein Verfahren zur Herstellung von Mineralfasern oder Mineralfaserngranulat. Ein bekanntes Verfahren zur Herstellung von Mineralfasern sieht vor, dass die flüssige Mineralschmelze auf einen drehenden Rotor geleitet und einem gezielten starken Luftstrom ausgesetzt wird, wobei Fasern entstehen. Diese Fasern werden dann durch den Luftstrom zu einer Transport- oder Aufnahmeeinrichtung geblasen. Die so erzeugten Mineralfasern, z.B. sogenannte Steinwolle, kann dann beispielsweise zur Wärmedämmung in Hohlräume eingebracht werden. Eine bekannte Handelsform der Steinwolle sind Steinwolleflocken, die vielfach auch fälschlicherweise als Steinwollegranulat bezeichnet werden, obwohl sie nicht körnig sind.

Steinwolleflocken finden auch Anwendung zur Beschichtung von Objekten. Zu diesem Zweck werden die Steinwolleflocken mit Luft gefördert und in einer Spritzpistole mit einem organischen Kleber benetzt und gegen das zu beschichtende Objekt gespritzt. Nachteilig erweist sich dabei der sehr hohe Verbrauch an Kleber und die Notwendigkeit, nach einer Spritzoperation die Spritzpistole vom Klebstoff zu reinigen. Ein weiterer Nachteil der Steinwolleflocken besteht darin, dass sie bei der Lagerung sehr leicht zusammenpappen und daher vor der Verarbeitung aufgelockert werden müssen. Trotzdem besteht dann immer noch die Gefahr, dass beim Spritzen Förderprobleme entstehen. Dadurch leidet auch die Qualität der Beschichtung. Diese wird unregelmässig und bietet daher keinen schönen Anblick. Schliesslich ist in einer Beschichtung, die dem Brandschutz dienen soll, ein hoher Gehalt an organischem Kleber unerwünscht, weil im Brandfall durch die Pyrolyse des Klebers giftige Gase erzeugt werden.

Zur Herstellung von Wärmedämmatten oder -platten ist es auch bereits bekannt, die Mineralfasern bei der Herstellung noch im heissen Zustand mit einem Kunstharz zu besprühen, wobei dann die Fasern eine Matte bilden. Ist der Kunststoffgehalt klein, so bleibt die Matte flexibel. Ist der Kunststoffgehalt relativ gross, so kann die Matte in dem nachfolgenden Arbeitsgang zu einer relativ steifen Platte gepresst werden. Solche Steinwollematten und -platten finden insbesondere zur Wärmedämmung Anwendung.

Es ist Aufgabe der vorliegenden Erfindung ein Verfahren zur Herstellung von Mineralfasern oder Mineralfaserngranulat zu schaffen, die bzw. das sich zur Herstellung von feuerfesten und / oder schall- und / oder wärmedämmenden Beschichtungen im Spritzverfahren eignen.

Erfindungsgemäss wird dies dadurch erreicht, dass die Mineralfasern bei der Herstellung noch im heissen Zustand mit einem Klebermaterial beschichtet werden, das nach der Beschichtung durch ein Lösungsmittel reaktivierbar ist. Dies hat den Vorteil, dass beim Spritzverfahren kein Kleber zugemischt werden muss und somit nach dem Spritzen keine aufwendigen Reinigungsarbeiten beim Spritzgerät notwendig werden.

Von besonderem Vorteil ist, wenn ein Klebermaterial zur Beschichtung verwendet wird, das durch Wasser als Lösungsmittel reaktivierbar ist. Wenn Wasser als Lösungsmittel beim Spritzverfahren verwendet wird, entstehen keine gesundheitsschädlichen Dämpfe. Wasser ist ferner praktisch fast kostenlos,so dass es beim Spritzen in ausreichendem Masse verwendet werden kann, um auch irgendwelche Staubentwicklung zu vermeiden. Im Gegensatz zum bekannten Stand der Technik werden daher beim Spritzen von Mineralfasern Beeinträchtigungen durch Staubentwicklung vermieden.

Gemäss einer vorteilhaften Ausführungsform der Erfindung wird als Klebermaterial ein anorganisches Polymer, insbesondere auf Silikatbasis,verwendet. Dies hat den Vorteil, dass das Klebermaterial durch die hohen Temperaturen der Mineralfasern und ihrer Umgebung bei der Herstellung nicht beeinträchtigt wird.

Ferner bleibt das Endprodukt frei von irgendwelchen organischen Verbindungen, was das mit dem erfindungsgemässen Verfahren hergestellte Material zur Herstellung von feuerfesten Beschichtungen äusserst brauchbar macht. Die mit diesem Material erstellten Beschichtungen geben im Brandfall keine giftigen Gase ab, weil im Gegensatz zu einem organischen Kleber der anorganische Kleber hohen Temperaturen widersteht.

Vorteilhaft wird zur Bildung von Mineralfasern die Mineralschmelze auf einen drehenden Rotor geleitet und die entstehenden Mineralfasern mit einem Gebläse vom Rotor zu einer Transport- oder Aufnahmeeinrichtung geblasen, wobei dann die Mineralfasern im Fluge mit dem Klebermaterial besprüht und damit beschichtet werden. Dies erlaubt es, die Mineralfasern mit einem minimalen Verbrauch an Klebermaterial zu beschichten. ·

Zur Bildung eines Granulats werden die beschichteten Materialfasern vorteilhaft durch ein Sieb hindurch gedrückt. Dadurch entsteht ein körniges Granulat, das im Gegensatz zu den bekannten Steinwolleflocken fliessfähig bleibt und daher problemlos bei der Herstellung von Beschichtungen mit einer Spritzeinrichtung verarbeitet werden kann. Von besonderem Vorteil ist es, wenn die beschichteten Mineralfasern über ein Sieb gestrichen und dabei zu Kügelchen zusammengerollt werden. Dadurch entsteht ein Granulat mit besonders gleichmässiger Körnung.

Vorteilhaft werden die im Fluge sich befindlichen Mineralfasern zusammen mit der sie fördernden Gebläseluft zu einem hohlkörperförmigen Strahl geformt, wobei dieser Strahl von innen her mit einem sich mit ihm vermischenden Strahl einer versprühten Flüssigkeit bestehend aus einer Trägerflüssigkeit, z.B. Wasser, und einem Klebermaterial vermischt wird. Dadurch kann der Verbrauch an Klebermaterial gering gehalten werden, denn in diesem hohlkörperförmigen Strahl befinden sich die Mineralfasern zur Hauptsache innen, währenddem die Schmelzetröpfchen, soweit sie nicht zu Fasern verformt wurden, wegen ihrer Schwere nach aussen geschleudert werden und nicht oder nur geringfügig mit Klebermaterial beschichtet werden.

Es ist zweckmässig, den hohlkörperförmigen Strahl von aussen her mit versprühtem Wasser zu besprengen. Dadurch wird die Kühlwirkung der Luft verstärkt.

Die Erfindung betrifft auch eine Vorrichtung zur Durchführung des Verfahrens. Diese Vorrichtung ist gekennzeichnet durch einen drehenden Rotor zur Bildung von Mineralfasern und mindestens einer im Bereich einer freien Stirnseite des Rotors angeordneten Düse für das Klebermaterial. Diese Vorrichtung ist einfach im Aufbau und ermöglicht die Herstellung der beschichteten Mineralfasern mit einem relativ geringen Verbrauch an Klebermaterial.

Zweckmässigerweise ist zur Bildung eines Granulats ein Sieb mit Mitteln zum Hindurchdrücken der mit Klebermaterial beschichteten Fasern vorgesehen. Granulat eignet sich besonders gut zur Verarbeitung mit einer Spritzvorrichtung.

Es hat sich ferner als vorteilhaft erwiesen, dass das Sieb einen Teil einer Siebtrommel bildet und dass ein Rotor mit gelenkigen Armen vorgesehen ist, die bei der Drehung des Rotors über das Sieb streichen und dabei die beschichteten Mineralfasern zu Kügelchen zusammenrollen und durch die Oeffnungen des Siebes drücken, um so ein Granulat zu bilden. Das mit einer solchen Vorrichtung hergestellte Granulat weist eine weitgehend homogene Körnung auf.

Die Erfindung betrifft ferner ein nach dem erfindungsgemässen Verfahren hergestelltes Mineralfaserngranulat. Es ist bereits vorher erwähnt worden, dass sich ein Granulat besonders gut zur Verarbeitung im Spritzverfahren eignet und die Herstellung von Beschichtungen mit ausserordentlich guten Brandschutzeigenschaften ermöglicht.

Die Erfindung sieht denn auch die Anwendung der Mineralfasern oder des Mineralfaserngranulats zur Herstellung von feuerfesten und / oder schall- und / oder wärmedämmenden Beschichtungen vor, welche dadurch gekennzeichnet ist, dass die Mineralfasern oder das Mineralfaserngranulat mit Luft und Wasser mit einer Pistole auf das zu beschichtende Objekt gespritzt wird. Da bei dieser Anwendung Wasser verwendet wird, entfallen die üblichen Reinigungsarbeiten für die Spritzpistole, und es bestehen keine gesundheitlichen Gefahren durch Staub oder durch Lösungsmitteldämpfe.

Ein Ausführungsbeispiel der Erfindung wird nun unter Bezugnahme auf die Zeichnung beschrieben. Es zeigt:

Figur 1 eine Vorrichtung zur Herstellung von beschichteten Mineralfasern,

Figur 2 eine Vorrichtung zur Herstellung eines Granulats aus beschichteten Mineralfasern,

Die Vorrichtung zur Herstellung von beschichteten Mineralfasern, z.B. sogenannter Steinwolle, besteht im wesentlichen aus einem sich drehenden Rotor 11, auf den von einem nicht eingezeichneten Ofen her über einen Schmelzekanal 13 die Mineralschmelze 15 geleitet wird. Beim Auftreffen auf den Rotor 11 werden feine Tröpfchen der Mineralschmelze durch die Zentrifugalkraft nach aussen geschleudert, wobei sie in den Bereich eines Luftstromes 17 gelangen. Dabei entstehen Mineralfasern, die zusammen mit der Gebläseluft einen hohlkörperförmigen Strahl 19 bilden. Tröpfchen der Schmelze, die nicht zu Mineralfasern verformt wurden, werden weiter nach aussen geschleudert.

Insoweit ist die beschriebene Vorrichtung zur Herstellung von Mineralfasern bekannt.

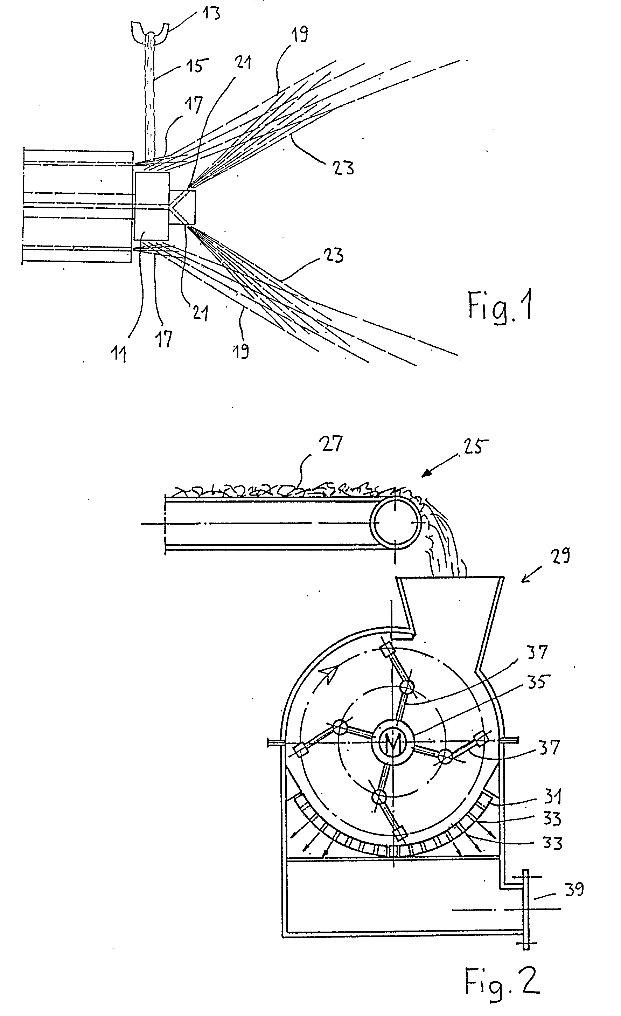

Der drehende Rotor 11 weist im Bereich der freien Stirnseite Düsen 21 für eine Flüssigkeit auf, die aus einer Trägerflüssigkeit, z.B. Wasser, und dem Klebermaterial besteht. Das Klebermaterial ist vorteilhaft ein anorganisches Polymer, z.B. auf Silikatbasis. Das Verhältnis zwischen Trägermaterial und Trägerflüssigkeit, z.B. Wasser, beträgt vorteilhaft etwa 1:2. Der Flüssigkeitsstrahl 23 vermischt sich von innen her mit dem hohlkörperförmigen Strahl 19 aus Luft und Mineralfasern. Dadurch werden die noch heissen Mineralfasern mit Klebermaterial beschichtet und fallen in losem und trockenem Zustand auf eine Transporteinrichtung. Diese Transporteinrichtung, welche in Figur 1 nicht dargestellt ist, ist in Figur 2 mit dem Bezugszeichen 25 bezeichnet.

Die so hergestellten beschichteten Mineralfasern 27 können in dieser Form zur Herstellung von Beschichtungen, Platten oder als Verstärkungsmaterial, z.B. für Gegenstände aus Fasernzement, verwendet werden. Wie aber Figur 2 zeigt, werden die beschichteten Metallfasern 27 vorteilhaft einer Einrichtung 29 zugeführt, welche ein Sieb 31 mit Oeffnungen 33 aufweist. Die Einrichtung 29 besitzt ferner einen Rotor 35 mit gelenkigen Armen 37, die bei der Drehung des Rotors 35 über das Sieb 31 streichen und dabei die beschichteten Mineralfasern zu Kügelchen zusammenrollen und durch die Oeffnungen 33 des Siebs 31 drücken, um so ein Granulat zu bilden. Das Granulat kann dann dem Auslass 39 der Einrichtung entnommen werden.

**Patentansprüche**

1. Verfahren zur Herstellung von Mineralfasern oder Mineralfaserngranulat, dadurch gekennzeichnet, dass die Mineralfasern bei der Herstellung noch im heissen Zustand mit einem Klebermaterial beschichtet werden, das nach der Beschichtung durch ein Lösungsmittel reaktivierbar ist.

2. Verfahren nach Anspruch 1, dadurch gekennzeichnet, dass das Klebermaterial mit Wasser als Lösungsmittel reaktiverbar ist.

3. Verfahren nach Anspruch 1 oder 2, dadurch gekennzeichnet, dass als Klebermaterial ein anorganisches Polymer, insbesondere auf Silikatbasis, verwendet wird.

4. Verfahren nach einem der Ansprüche 1 bis 3, bei welchem zur Bildung von Mineralfasern die Mineralschmelze (15) auf einen drehenden Rotor (11) geleitet wird und die entstehenden Mineralfasern mit einem Gebläse vom Rotor weg zu einer Transport- oder Aufnahmeeinrichtung (25) geblasen werden, dadurch gekennzeichnet, dass die Mineralfasern im Fluge mit dem Klebermaterial besprüht und damit beschichtet werden.

5. Verfahren nach einem der Ansprüche 1 bis 4, dadurch gekennzeichnet, dass die beschichteten Mineralfasern zur Bildung eines Granulats durch ein Sieb (31) hindurchgedrückt werden.

6. Verfahren nach Anspruch 5, dadurch gekennzeichnet, dass die beschichteten Materialfasern über ein Sieb (31) gestrichen und dabei zu Kügelchen zusammengerollt und durch Oeffnungen (33) des Siebs (31) gedrückt werden, um so ein Granulat zu bilden.

7. Verfahren nach einem der Ansprüche 1 bis 6, dadurch gekennzeichnet, dass sich im Fluge befindliche Mineralfasern zusammen mit der sie fördernden Gebläseluft zu einem hohlkörperförmigen Strahl (19) geformt werden und dass dieser Strahl (19) von innen her mit einem mit ihm sich vermischenden Strahl (23) einer Kleberflüssigkeit vermischt wird.

8. Verfahren nach Anspruch 7, dadurch gekennzeichnet, dass die Kleberflüssigkeit aus einer Trägerflüssigkeit, z.B. Wasser, und dem Klebermaterial besteht.

9. Verfahren nach Anspruch 7 oder 8, dadurch gekennzeichnet, dass der hohlkörperförmige Strahl (19) von aussen her mit versprühtem Wasser beaufschlagt wird.

10. Vorrichtung zur Durchführung des Verfahrens nach einem der Ansprüche 1 bis 9, gekennzeichnet durch einen drehenden Rotor (11) zur Bildung von Mineralfasern und mindestens einer im Bereich einer freien Stirnseite des Rotors (11) angeordneten Düse (21) für Kleberflüssigkeit.

11. Vorrichtung nach Anspruch 10, dadurch gekennzeichnet, dass zur Bildung eines Granulats ein Sieb (31) mit Mitteln (35, 37) zum Hindurchdrücken der mit Klebermaterial beschichteten Fasern vorgesehen ist.

12. Vorrichtung nach Anspruch 11, dadurch gekennzeichnet, dass das Sieb (31) einen Teil einer Siebtrommel (29) bildet und dass ein Rotor (35) mit gelenkigen Armen (37) vorgesehen ist, die bei der Drehung des Rotors (35) über das Sieb (31) streichen und dabei die beschichteten Mineralfasern zu Kügelchen zusammenrollen und durch die Oeffnungen (33) des Siebs (31) drücken, um so ein Granulat zu bilden.

13. Mineralfasern oder Mineralfaserngranulat hergestellt nach dem Verfahren gemäss einem der Ansprüche 1 bis 9.

14. Anwendung der Mineralfasern oder des Mineralfaserngranulats von feuerbeständigen und / oder schall- und / oder wärmedämmenden Beschichtungen, dadurch gekennzeichnet, dass das Granulat mit Luft und Wasser mit einer Spritzpistole auf das zu beschichtende Objekt gespritzt wird.

Fig.1

Fig.2

## EINSCHLÄGIGE DOKUMENTE

EP 88810594.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - C - 495 875 (SCHLOTTERBECK)<br><br>* Patentanspruch; Seite 2, Zeilen 16-22 * | 1-3 | C 03 C 25/02<br>C 03 B 37/05 |
| Y | -- | 4,7-10 | C 03 B 37/14<br>A 62 C 1/16 |
| Y | US - A - 3 233 989 (STALEGO)<br><br>* Fig. 1; Spalte 5, Zeilen 66-71; Spalte 6, Zeilen 22-26 * | 4,7-10 | E 04 B 1/74 |
| X | GB - A - 2 025 221 (AHLSTROM OSAKEYHTIO)<br><br>* Patentansprüche 1-5 * | 14 | |
| A | US - A - 2 375 284 (COSS)<br><br>* Anspruch 6; Seite 1, rechte Spalte, Zeile 22 - Seite 2, linke Spalte, Zeile 18 * | 5,6, 11-13 | |
| A | EP - A2/A3 - 0 146 840 (MANVILLE SERVICE CORPORATION)<br><br>* Ansprüche 1,8,9 *<br><br>---- | 14 | RECHERCHIERTE SACHGEBIETE (Int. Cl.4)<br><br>C 03 C<br>C 03 B<br>B 01 J<br>A 62 C<br>E 04 B |

Der vorliegende Recherchenbericht wurde für alle Patentansprüche erstellt.

| Recherchenort | Abschlußdatum der Recherche | Prüfer |
|---|---|---|
| WIEN | 23-11-1988 | HAUSWIRTH |